# DEMANDE DE BREVET EUROPEEN

(11) **EP 4 755 995 A1**
(43) Date de publication de la demande: **10.06.2026**
(21) Numéro de dépôt: 25219693.6
(22) Date de dépôt: 01.12.2025
(51) Int. Cl.: C10L 5/36, C10L 5/44, C05F 5/00, C05F 11/00

(54) **PROCÉDÉ DE FABRICATION DE GRANULÉS DE BOIS**

(30) Priorité: 09.12.2024 FR 2413693
(71) Demandeur: Melia, 67000 Strasbourg (FR)
(72) Inventeur: NAJJAR, Matthias, 67300 SCHILTIGHEIM (FR); LINDECKER, Lucas, 68040 INGERSHEIM (FR)
(74) Mandataire: Ipsilon

(57) **Abrégé**

L'invention concerne un procédé de fabrication de granulés de bois à partir de déchets verts ligneux, comportant les étapes suivantes :
- collecte de déchets verts ligneux (1),
- broyage grossier des déchets verts ligneux (2),
- broyage fin du premier broyat et d'un second broyat de bois résineux (3), par insertion du premier et du second broyat dans au moins un broyeur défibreur,
- séchage du premier et second broyats défibrés (4), dans au moins un séchoir,
- mélange des premier et second broyats défibrés (5), dans au moins un mélangeur,
- granulation du mélange obtenu (6), dans au moins une presse à granuler.

L'invention concerne encore une installation pour la mise en œuvre d'un procédé selon l'invention.

## Description

### Domaine technique

La présente invention concerne un procédé de fabrication de granulés de bois. Plus particulièrement, elle concerne un procédé de fabrication de granulés de bois permettant de valoriser des déchets verts ligneux.

### Technique antérieure

Le granulé de bois est un combustible habituellement issu des résidus de scieries. L'avantage de ce combustible est qu'il peut être, dans la plupart des régions du monde, issu de matières premières locales. Il est donc une alternative particulièrement intéressante aux modes de chauffage traditionnels basés sur la combustion d'hydrocarbure ou l'électricité. Par rapport à la bûche de bois, le granulé permet un chauffage plus facilement régulable, notamment par thermostat, permettant d'optimiser l'énergie consommée par rapport aux besoins, et ainsi de réduire les coûts et les émissions de CO2.

Cependant, la matière première principalement utilisée pour la fabrication de granulés de bois étant issue des scieries, le bois utilisé est un bois résineux de forêt. Or dans de nombreuses régions du monde, les forêts sont perturbées par le réchauffement climatique, et les granulés ne peuvent plus être fabriqués localement. De plus, il est aujourd'hui important de limiter l'exploitation forestière, notamment la coupe d'arbres, afin de conserver la biodiversité et leur fonction de puits de CO2.

### Exposé de l'invention

La présente invention vise à pallier ces inconvénients en proposant un procédé de fabrication de granulés de bois à partir de déchets verts ligneux, caractérisé en ce qu'il comporte les étapes suivantes dans l'ordre :
- collecte de déchets verts ligneux,
- broyage grossier des déchets verts ligneux,
- broyage fin du premier broyat et d'un second broyat de bois résineux, par insertion du premier et du second broyat dans au moins un broyeur défibreur,
- séchage du premier et second broyats défibrés, dans au moins un séchoir,
- mélange des premier et second broyats défibrés, dans au moins un mélangeur,
- granulation du mélange obtenu, dans au moins une presse à granuler.

Grâce à ces dispositions, l'invention permet la fabrication de granulés en utilisant des déchets non ou peu valorisés habituellement, et notamment du bois issu d'arbres feuillus. Ces granulés sont performants en termes de pouvoir calorifique inférieur (PCI) et de taux de cendres.

Ledit procédé de fabrication de granulés de bois selon la revendication 1, peut comporter, avant l'étape de broyage fin, une étape de criblage fin des déchets verts ligneux broyés, avec sélection des produits du broyage grossier dont la granulométrie est supérieure à un seuil de criblage fin, afin d'obtenir un premier broyat présentant une teneur en matière ligneuse supérieure à un seuil de lignosité cible. Ceci permet d'éliminer du procéder un certain nombre d'impuretés, c'est-à-dire de matière non ligneuse.

Ledit procédé de fabrication peut comporter en outre les étapes suivantes, avant l'étape de broyage grossier :
- broyage préparatoire des déchets verts ligneux,
- criblage grossier des déchets verts ligneux, avec sélection des produits du broyage préparatoire dont la granulométrie est supérieure à un seuil de criblage grossier, afin d'obtenir un broyat préparatoire.

Ceci permet d'éliminer du procédé un certain nombre d'impuretés non ligneuses et ainsi d'obtenir des granulés plus performants.

Ledit procédé de fabrication peut comporter, avant l'étape de broyage grossier, une étape de séchage préparatoire des déchets verts ligneux par un stockage à l'air libre, ce qui permet d'obtenir que l'herbe et les feuilles, notamment, se flétrissent, et que lors de l'étape de broyage grossier ces éléments forment des particules fines qui pourront être éliminées lors du criblage fin.

L'étape de séchage préparatoire peut durer au moins 72 heures, ce qui permet d'obtenir un effet suffisant dans certaines conditions météorologiques. Si les conditions sont peu favorables, l'étape de séchage préparatoire peut durer jusqu'à une ou plusieurs semaines.

Le premier broyat et le second broyat peuvent être broyés ensemble dans au moins un broyeur défibreur, ce qui assure un broyage plus homogène des deux broyats et ainsi un mélange plus efficace de ces broyats dans les granulés.

Le premier broyat peut être envoyé vers le broyeur défibreur par l'intermédiaire d'un premier convoyeur, et le second broyat peut être envoyé vers le broyeur défibreur par l'intermédiaire d'un deuxième convoyeur distinct du premier convoyeur, ce qui permet de contrôler la quantité de chacun des broyats entrant dans le défibreur, et ainsi la teneur qu'auront chacun de ces broyats dans le granulé.

Le taux d'humidité des broyats en entrée du broyeur défibreur peut être compris entre 25 et 50%, ce qui permet de réduire les risques d'incendie.

Au niveau du mélangeur, la teneur en poids en premier broyat peut être supérieure ou égale à 30 %, ce qui permet une valorisation d'une grande quantité de déchets verts ligneux pour une quantité donnée de granulés produits.

Les produits de broyage non sélectionné lors d'au moins une étape de criblage peuvent être envoyés vers une unité de compostage, ce qui permet de valoriser au mieux l'ensemble des déchets verts, ligneux et non ligneux.

La présente invention concerne également une installation pour la mise en œuvre d'un procédé de fabrication de granulés de bois selon l'une des revendications 1 à 9, comportant :
- au moins un broyeur grossier, configuré pour effectuer l'étape de broyage grossier,
- au moins un cribleur fin, configuré pour effectuer l'étape de criblage fin,
- au moins un moyen de transfert de matière du broyeur grossier vers le cribleur fin,
- au moins un broyeur fin, configuré pour effectuer l'étape de broyage fin,
- au moins un moyen de transfert de matière du cribleur fin vers le broyeur fin,
- au moins un séchoir, configuré pour effectuer l'étape de séchage,
- au moins un moyen de transfert de matière du broyeur fin vers le séchoir,
- au moins un mélangeur, configuré pour effectuer l'étape de mélange,
- au moins un moyen de transfert de matière du séchoir vers le mélangeur,
- au moins une presse à granuler, configurée pour effectuer l'étape de granulation,
- au moins un moyen de transfert de matière du mélangeur vers la presse à granuler.

Grâce à ces dispositions, l'invention permet la fabrication de granulés en utilisant des déchets non ou peu valorisés habituellement. Ces granulés sont performants en termes de pouvoir calorifique inférieur (PCI) et de taux de cendres.

### Brève description des dessins

La présente invention et ses avantages apparaîtront mieux dans la description suivante de plusieurs modes de réalisation donnés à titre d'exemples non limitatifs, en référence aux dessins annexés, dans lesquels :

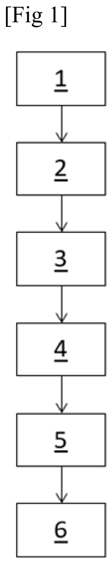

[Fig 1] la fig. 1 est une vue schématique du procédé selon l'invention.

### Description des modes de réalisation

Dans les exemples de réalisation illustrés, les éléments ou parties identiques portent les mêmes numéros de référence.

En référence à la figure 1, le procédé selon l'invention permet de fabriquer des granulés de bois à partir de déchets verts ligneux.

Dans la présente invention, le terme « déchets verts ligneux » désigne l'ensemble des matières issues de végétaux ligneux et provenant de la taille, de la coupe ou de l'entretien de ces végétaux, par exemple lors de l'entretien de jardins, d'espaces verts, de forêts, de haies, ou encore d'arbres. Il peut s'agir aussi de végétaux feuillus, que de végétaux résineux.

Le procédé selon l'invention commence par une première étape 1, de collecte de déchets verts ligneux. Au vu des conditions dans lesquelles sont produits et collectés ces déchets, ils sont habituellement accompagnés d'un certain nombre d'impuretés, tels que de la terre, des cailloux, etc. Ils sont aussi le plus souvent accompagnés de déchets verts non ligneux tel que de l'herbe de tonte, des feuilles ramassées, etc.

Les déchets verts ligneux, après avoir été collectés, peuvent subir un pré-traitement comportant une étape de broyage préparatoire, et une étape de criblage grossier. Le pré-traitement est optionnel, car il peut être omis selon le type de déchets verts ligneux collectés.

Le broyage préparatoire permet de réduire la plus grande dimension des déchets à verts à une dimension inférieure à 1 m, par exemple comprise entre 100 et 600 cm, de préférence entre 30 et 50 cm.

Le broyage préparatoire est de préférence un broyage lent, c'est-à-dire effectué au moyen d'un broyeur lent, aussi appelé prébroyeur, dont la vitesse de fonctionnement est par exemple comprise entre 30 et 50 tours/minute.

Le criblage grossier permet de sortir du procédé les particules les plus fines, qui ont une teneur en matière ligneuse réduite et n'ont donc pas d'intérêt pour le combustible. Pour la suite du procédé, on conserve à l'issue du criblage grossier les particules dont la granulométrie est supérieure à un certain seuil, qui est par exemple compris entre 60 et 100 mm, de préférence entre 70 et 90 mm.

Le pré-traitement permet de se débarrasser d'une partie des impuretés collectées avec les déchets verts, notamment une partie des brindilles, de l'herbe, de la terre, ou encore des cailloux.

Les éléments sortis du procédé lors du criblage grossier peuvent être envoyés vers une unité de compostage.

Après la première étape 1, et éventuellement après le pré-traitement, le procédé peut comporter une étape de séchage préparatoire. Lors de cette étape, les déchets verts ligneux collectés, qui ont éventuellement subis le broyage préparatoire et le criblage grossier, sont stockés à l'air libre, de préférence à l'abri des intempéries. Le stockage à l'air libre peut durer plusieurs jours, par exemple au moins 72h. La durée peut varier selon les saisons et les conditions météorologiques, l'objectif étant par exemple que les feuilles soient suffisamment sèches pour facilement s'effriter. La durée du stockage à l'air libre peut donc en pratique atteindre au moins une semaine, et est compris de préférence entre deux et six semaines Le séchage préparatoire est optionnel, car il peut être omis selon le type de déchets verts ligneux collectés.

Le procédé comporte ensuite une deuxième étape 2 de broyage grossier des déchets verts. Le broyage grossier permet de réduire la plus grande dimension des déchets à verts à une dimension inférieure à un certain seuil. Ce seuil est de préférence inférieur ou égal à 150 mm, et est par exemple compris entre 70 et 130 mm, de préférence entre 80 et 120 mm.

Le broyage grossier est de préférence un broyage rapide, c'est-à-dire effectué au moyen d'un broyeur rapide, dont la vitesse de fonctionnement est par exemple comprise entre 800 et 1200 tours/minute.

Après le broyage grossier, le procédé selon l'invention peut comporter une étape de criblage fin. Le criblage fin permet de sortir du procédé les particules les plus fines, qui ont une teneur en matière ligneuse réduite et n'ont donc pas d'intérêt pour le combustible. Pour la suite du procédé, on peut ainsi conserver à l'issue du criblage fin les particules dont la granulométrie est supérieure à un certain seuil, qui est par exemple supérieur ou égal à 10 mm, par exemple compris entre 20 et 30 mm.

Les éléments sortis du procédé lors du criblage fin peuvent être envoyés vers une unité de compostage.

Lors du broyage grossier, si les déchets verts ont subi l'étape de séchage préparatoire et qu'ils comportent des feuilles, de l'herbe ou encore des brindilles, ce type d'éléments, fragilisé par le séchage, va former des particules extrêmement fines. Ces particules fines, qui ne comporte que peu ou pas de matière ligneuse, pourront être sorties du procédé lors du criblage fin, et éventuellement envoyées vers une unité de compostage.

A l'issue du broyage grossier, et éventuellement du criblage fin, on obtient un premier broyat présentant de préférence une teneur en matière ligneuse supérieure à un seuil de lignosité cible. Ce seuil est par exemple compris entre 90 et 99 %, par exemple il peut être de 95 %.

Après l'étape de broyage grossier, et éventuellement de criblage fin, le procédé comporte une troisième étape 3 de broyage fin, dans au moins un broyeur défibreur. Deux broyats subissent ce broyage fin : le premier broyat, issu du broyage grossier, et éventuellement du criblage fin, et un second broyat, qui est un broyat de bois résineux. Le second broyat peut notamment être le broyat traditionnellement utilisé pour réaliser des granulés de bois.

Le fait d'utiliser ce second broyat permet de garantir une certaine stabilité des propriétés des granulés de bois obtenus par le procédé selon l'invention. Les déchets verts ligneux sont par nature très hétérogènes, et peuvent varier grandement au niveau du type et de la quantité d'impuretés qu'ils contiennent, des essences de bois qu'ils contiennent, du type et des quantités de déchets verts non ligneux qui s'y trouvent, etc. Il est donc très difficile d'obtenir un granulé présentant des performances stables et qui soit réalisé à 100 % à partir de déchets verts. L'utilisation d'un second broyat, plus stable, en complément du premier broyat permet donc de pouvoir utiliser des déchets verts ligneux issus de provenances variées, sans qu'il ne soit nécessaire d'effectuer des opérations lourdes de tris, tout en obtenant des granulés ayant un niveau de performances, en termes notamment de pouvoir calorifique et de taux de cendres, équivalent aux granulés existants.

Les broyats peuvent par exemple être utilisés à hauteur de 5 0% de premier broyat et 50 % de second broyat. Selon les matières utilisées, la teneur en premier broyat peut être supérieure à 30 %, de préférence supérieure à 40 % voire 50 %, et atteindre 60 %, voire 70 %. Ces taux peuvent être constatés dans le mélangeur décrit plus bas.

Les premier et second broyats peuvent subir le broyage fin ensemble, dans un broyeur défibreur commun, ou dans des broyeurs défibreurs séparés. De préférence, ils sont insérés simultanément dans au moins un broyeur défibreur commun, ce qui permet de s'assurer qu'on obtienne un broyage uniforme des deux broyats. Dans ce cas, on peut prévoir que les premier et second broyats soient acheminés vers le broyeur défibreur chacun pour un convoyeur séparé, ce qui permet de contrôler la proportion de chaque broyat dans le granulé. Pour ce contrôle, la vitesse de chacun des convoyeurs peut par exemple être commandée par un contrôleur unique, configuré pour adapter la vitesse des convoyeurs afin de respecter une cible de proportion en poids ou en volume de chacun des broyats. Pour simplifier ce contrôle, le mélangeur peut comporter un moyen d'approvisionnement, par exemple une vis sans fin. Ce moyen d'approvisionnement peut être configuré avec les convoyeurs pour être alimenté en permanence au maximum du débit volumique qu'il supporte. Ceci permet un contrôle en volume, ce qui est plus pertinent que le poids car le taux d'humidité des broyats peut varier.

Le broyage fin permet d'obtenir une granulométrie inférieure à un certain seuil, compris par exemple entre 6 et 9 mm, de préférence entre 7 et 8 mm.

Le ou les broyeurs défibreurs utilisés sont par exemple du type comportant des galets entraînés en rotation par un rotor, les galets étant rotatifs selon des axes perpendiculaires à l'axe de rotation du rotor. La matière est écrasée entre la surface extérieure des galets et un tamis disposé perpendiculairement à l'axe de rotation du rotor. La matière est écrasée jusqu'à obtenir une dimension inférieure à la granulométrie du tamis. Ce type de broyeur permet de fonctionner avec une matière relativement humide, notamment avec des broyats dont le taux d'humidité est compris entre 25 et 50 %, par exemple entre 25 et 40 % pour le premier broyat et entre 35 et 45 % pour le second broyat. Ce broyage « humide » permet d'opérer avec une sécurité accrue, le risque d'incendie du à l'échauffement de la matière lors de son broyage étant réduit.

Après le broyage fin, le procédé selon l'invention comporte une quatrième étape 4 de séchage dans un séchoir.

Le séchoir est de préférence de type basse température, c'est-à-dire qu'il opère par exemple à une température comprise entre 120 et 150°C, de préférence entre 130 et 140°C. Le séchoir comporte par exemple un tunnel parcouru par un ou plusieurs tapis mobiles perforés, et le produit à sécher parcourt le tunnel sur le tapis mobile. De l'air chaud est insufflé dans le tunnel par le dessous. Deux tapis superposés peuvent être utilisés, afin que la matière effectue un premier trajet de pré-séchage sur le tapis supérieur, puis un deuxième trajet de séchage sur le niveau inférieur. Les tapis mobiles peuvent évoluer à une vitesse comprise entre 2 et 4 m/s, par exemple 3 m/s, et le temps de séchage durer entre 40 et 80 minutes, de préférence entre 50 et 70 minutes.

Après le séchage, le procédé selon l'invention comporte une cinquième étape 5 de mélange dans un mélangeur, afin d'obtenir une certaine homogénéité parmi les granulés concernant leur taux d'humidité, leur teneur en premier et second broyat, mais également leur teneur en différentes essences composant le premier broyat.

Lors de l'étape de mélange, de l'eau peut être ajoutée à la matière afin d'atteindre un seuil cible de taux d'humidité. En effet, un certain taux d'humidité est nécessaire pour l'étape à venir de granulation. Ce seuil est par exemple compris entre 12 et 15 %.

Le mélangeur peut fonctionner en continu, ou par batch.

S'il fonctionne par batch, le mélangeur peut comporter une cuve traversée par un rotor horizontal, sur lequel sont fixés des éléments hélicoïdaux s'étendant autour de l'axe du rotor.

A l'issue de l'étape de mélange, le procédé comporte une sixième étape 6 de granulation dans une presse à granuler. Dans une telle presse, la matière est comprimée par des rouleaux pour passer à travers une matrice, dont les trous correspondent au diamètre des granulés. Le processus se déroule à haute pression et à une température par exemple comprise entre 70 et 100°.

Après l'étape de granulation, le procédé peut comporter une étape de refroidissement. Cette étape est optionnelle. Il s'agit par exemple d'un refroidissement par ventilation, ce qui permet d'isoler les particules fines soulevées par la ventilation et de les renvoyer dans le mélangeur. La ventilation permet également de réduire l'humidité présente en surface des granulés.

Les granulés obtenus par le procédé selon l'invention ont été testés et présentent des performances similaires aux granulés existant :
- pouvoir calorifique inférieur (PCI) supérieur ou égal à 4,6 kWh/kg,
- taux de cendres inférieur à 2,5 %.

La présente invention concerne également une installation pour la mise en œuvre d'un procédé de fabrication selon l'invention, comportant :
- au moins un broyeur grossier, configuré pour effectuer l'étape de broyage grossier,
- au moins un moyen de transfert de matière du broyeur grossier vers le cribleur fin,
- au moins un broyeur fin, configuré pour effectuer l'étape de broyage fin,
- au moins un moyen de transfert de matière du cribleur fin vers le broyeur fin,
- au moins un séchoir, configuré pour effectuer l'étape de séchage,
- au moins un moyen de transfert de matière du broyeur fin vers le séchoir,
- au moins un mélangeur, configuré pour effectuer l'étape de mélange,
- au moins un moyen de transfert de matière du séchoir vers le mélangeur,
- au moins une presse à granuler, configurée pour effectuer l'étape de granulation,
- au moins un moyen de transfert de matière du mélangeur vers la presse à granuler.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Procédé de fabrication de granulés de bois à partir de déchets verts ligneux, **caractérisé en ce qu'**il comporte les étapes suivantes dans l'ordre :
- collecte de déchets verts ligneux (1),
- broyage grossier des déchets verts ligneux (2),
- broyage fin du premier broyat et d'un second broyat de bois résineux (3), par insertion du premier et du second broyat dans au moins un broyeur défibreur,
- séchage du premier et second broyats défibrés (4), dans au moins un séchoir,
- mélange des premier et second broyats défibrés (5), dans au moins un mélangeur,
- granulation du mélange obtenu (6), dans au moins une presse à granuler.

2. Procédé de fabrication de granulés de bois selon la revendication 1, **caractérisé en ce qu'**il comporte, avant l'étape de broyage fin, une étape de criblage fin des déchets verts ligneux broyés, avec sélection des produits du broyage grossier dont la granulométrie est supérieure à un seuil de criblage fin, afin d'obtenir un premier broyat présentant une teneur en matière ligneuse supérieure à un seuil de lignosité cible.

3. Procédé de fabrication de granulés de bois selon l'une des revendications 1 ou 2, **caractérisé en ce qu'**il comporte en outre les étapes suivantes, avant l'étape de broyage grossier (2) :
- broyage préparatoire des déchets verts ligneux,
- criblage grossier des déchets verts ligneux, avec sélection des produits du broyage préparatoire dont la granulométrie est supérieure à un seuil de criblage grossier, afin d'obtenir un broyat préparatoire.

4. Procédé de fabrication de granulés de bois selon l'une des revendications 2 à 3, **caractérisé en ce que** les produits de broyage non sélectionné lors d'au moins une étape de criblage (3) sont envoyés vers une unité de compostage.

5. Procédé de fabrication de granulés de bois selon l'une des revendications 1 à 4, **caractérisé en ce qu'**il comporte, avant l'étape de broyage grossier (2), une étape de séchage préparatoire des déchets verts ligneux par un stockage à l'air libre.

6. Procédé de fabrication de granulés de bois selon la revendication 5, **caractérisé en ce que** l'étape de séchage préparatoire dure au moins 72 heures.

7. Procédé de fabrication de granulés de bois selon l'une des revendications 1 à 6, **caractérisé en ce que** le premier broyat et le second broyat sont broyés ensemble dans au moins un broyeur défibreur.

8. Procédé de fabrication de granulés de bois selon la revendication 7, **caractérisé en ce que** le premier broyat est envoyé vers le broyeur défibreur par l'intermédiaire d'un premier convoyeur, et le second broyat est envoyé vers le broyeur défibreur par l'intermédiaire d'un deuxième convoyeur distinct du premier convoyeur.

9. Procédé de fabrication de granulés de bois selon l'une des revendications 1 à 8, **caractérisé en ce qu'**au niveau du mélangeur, la teneur en poids en premier broyat est supérieure ou égale à 30 %.

10. Installation pour la mise en œuvre d'un procédé de fabrication de granulés de bois selon l'une des revendications 1 à 9, comportant :
- au moins un broyeur grossier, configuré pour effectuer l'étape de broyage grossier (2),
- au moins un moyen de transfert de matière du broyeur grossier vers le cribleur fin,
- au moins un broyeur fin, configuré pour effectuer l'étape de broyage fin (3),
- au moins un moyen de transfert de matière du cribleur fin vers le broyeur fin,
- au moins un séchoir, configuré pour effectuer l'étape de séchage (4),
- au moins un moyen de transfert de matière du broyeur fin vers le séchoir,
- au moins un mélangeur, configuré pour effectuer l'étape de mélange (5),
- au moins un moyen de transfert de matière du séchoir vers le mélangeur,
- au moins une presse à granuler, configurée pour effectuer l'étape de granulation (6),
- au moins un moyen de transfert de matière du mélangeur vers la presse à granuler.
